# EUROPEAN PATENT APPLICATION

(11) **EP 1 713 217 A1**
(43) Date of publication of application: **18.10.2006**
(21) Application number: 06300088.9
(22) Date of filing: 31.01.2006
(51) Int. Cl.: H04L 12/56

(54) **IP multicasting with improved redundancy**

(30) Priority: 31.01.2005 US 45151
(71) Applicant: Alcatel, 75008 Paris (FR)
(72) Inventor: Rokui, Reza, Kanata, Ontario K2M 2R8 (CA)
(74) Representative: Hervouet, Sylvie

(57) **Abstract**

A system and method are provided for providing redundancy in PIM-SM Rendezvous Point selection, without requiring the signaling and overhead of a bootstrap messaging system. Each router stores a prioritized list of eligible Rendezvous Points for each group. When selecting an initial RP for a group, each router selects the RP having the highest priority. If the initial RP, or current RP, becomes unicast unreachable, the routers select an alternate RP based on the eligible routers' priorities. Since the prioritized lists stored at each router are identical, each router will use the same RP for a given group. The invention combines the simplicity of static PIM-SM configuration with the redundancy of bootstrap messaging PIM-SM configuration.

## Description

### Field of the invention

The invention relates to multicasting within Internet Protocol networks, and more particularly to providing redundancy during PIM-SM multicasting.

### Background of the invention

In protocol independent multicasting sparse mode (PIM-SM), point to multipoint multicast trees must be established between a source which provides multicasting content and hosts which desire the multicasting content. However, a shortest path tree (SPT) can not be created directly between the hosts and the source because the hosts are unaware of the identification of the source. The hosts can only identify the content, by a group. Rendezvous Points (RPs) are routers used as temporary waypoints in order to assist in creation of the SPT. All routers have access to an identical mapping between multicast Groups G and RPs, one RP being associated with each multicast Group. When a router receives either an IGMP-JOIN(*, G) message or a PIM-JOIN (*, G) message, the router establishes a route towards the RP associated with the group. As numerous routers establish routes to the RP, an RP Tree (RPT) is established. Similarly, the router which is connected to the multicast source (Source Router) has the same mapping between RP and multicast group G. When the source begins transmitting IP packets for a group, the source router registers the IP packets with the RP by encapsulating the IP packets and forwarding them to the RP. As the routers connected to the multicast hosts (Host Routers) receive the IP packets via the RPT, the routers learn of the identification of the source, create an SPT to the source, and tear down the multicast tree to the RP. The RPT tree is thereby converted into an SPT.

In order to create the most efficient RPT and SPT, the routers must have the same view of the network and use the same RP for a particular group. Each router must have access to identical Group-RP mappings, so that for a given group each router establishes routes to the same RP. The Group-RP mappings of each router may be configured statically. The Group-RP mappings are configured manually by simply associating each group with an RP.

If an RP fails or becomes unavailable, then routers configured statically are unable to establish routes to the RP and the multicasting is interrupted or unavailable. Another method of configuring the Group-RP mappings at each router uses bootstrap messaging. In bootstrap messaging, each router that decides it wants to be an RP for a particular group notifies a Bootstrap Router (BSR). As the BSR receives messages from the RPs, it designates each one as a candidate RPs (cRP) for the group. The BSR then decides which cRP is the best RP for the group (based on some criteria), and informs all routers in the network of the router that will be the RP for the group. The routers then update their Group-RP mappings to include the new association between the group and the RP selected by the BSR.

If the RP for a group then becomes unavailable, the BSR can collect new bootstrap messages, determine a new cRP to be the RP for the group, and notify all the routers in the network of the identify of the new RP for the group. The routers can then establish connections to the new RP, as needed. However, both creation of the initial Group-RP mappings and the recovery following failure of an RP require much signaling between routers, cRPs, and the BSR. Furthermore, a redundant BSR may be needed in case the BSR itself fails.

A method of configuring Group-RP mappings in routers which had the simplicity of existing static configuration and the flexibility of existing dynamic configuration methods would allow redundancy to be implemented in PIM-SM systems while avoiding the overhead and complications of bootstrap messaging.

### Summary of the invention

In accordance with one aspect of the invention, a method is provided for selecting a Rendezvous Point (RP) for use by a router implementing PIM-SM connections. For each of at least one multicast group, an identification of eligible RPs is statically configured, along with a corresponding RP-priority of each eligible RP. At the router, an RP for a particular multicast group is selected as the eligible RP which has the highest RP-priority for the particular multicast group and which is also unicast reachable. An RP for a particular multicast group may be selected in response to receipt at the router of unicast unreachability of a current RP.

In accordance with another aspect of the invention, a router for implementing PIM-SM multicast connections is provided. The router includes instructions for accessing an identification of eligible RPs and corresponding RP-priorities for each multicast group. The router includes instructions for selecting as the RP for a particular multicast group the eligible RP which has the highest RP-priority for the particular multicast group and which is unicast reachable. The router is a source router connected to a source of the particular multicast group, a host router connected to a host of the particular multicast group, or an intermediate router within an RPT between a host router and the RP selected for the particular multicast group.

In accordance with another aspect of the invention, a method is provided for providing RP redundancy for a multicast group in a PIM-SM multicast connection. Each identification of eligible RPs are statically configured, along with a corresponding RP-priority for each eligible RP. At a router, a current RP is selected for the multicast group, the current RP being selected as the eligible RP having the highest RP-priority for the multicast group and which is also unicast reachable.

In accordance with another aspect of the invention, a router for implementing a PIM-SM multicast connection is provided. The router includes instructions for accessing each identification of eligible RPs associated with multicast group, along with a corresponding RP-priority of each eligible RP. The router also includes instructions for selecting as the current RP of the multicast group the eligible RP having the highest RP-priority for the multicast group and which is also unicast reachable. The router includes instructions for selecting as an alternate RP for the multicast group the eligible RP which has the highest RP-priority for the multicast group and which is also unicast reachable, upon receipt of notification at the router that the current RP has become unicast unreachable. The router is a source router connected to a source of the multicast group, a host router connected to a host of the multicast group, or an intermediate router within an RPT between a host router and the RP selected for the multicast group.

The methods and instructions may be stored in the form of software instructions stored on computer-readable media.

The methods and apparatus of the present invention allow redundant RPs to be implemented in PIM-SM systems, without requiring the use of cRPs, BSRs, redundant BSRs, and associated messaging. By configuring each router with a list of prioritized RPs, each router can immediately establish a route to an alternate RP upon failure of the original RP, each router establishing a route to the same RP. The source router can immediately register source IP packets to the new RP. Dynamic RP redundancy is achieved by combining the dynamic behaviour of unicast reachability with static configuration of multiple RPs in each multicast group.

### Brief description of the drawings

The features and advantages of the invention will become more apparent from the following detailed description of the preferred embodiment(s) with reference to the attached figures, wherein:
FIG. 1 is a block diagram of a portion of an example network in which PIM-SM multicasting is implemented;
FIG. 2 is a table of a Group-RP mapping according to one embodiment of the invention; and
FIG. 3 is a flowchart of a method by which a router selects a rendezvous point according to one embodiment of the invention.

It will be noted that in the attached figures, like features bear similar labels.

### Detailed description of the embodiments

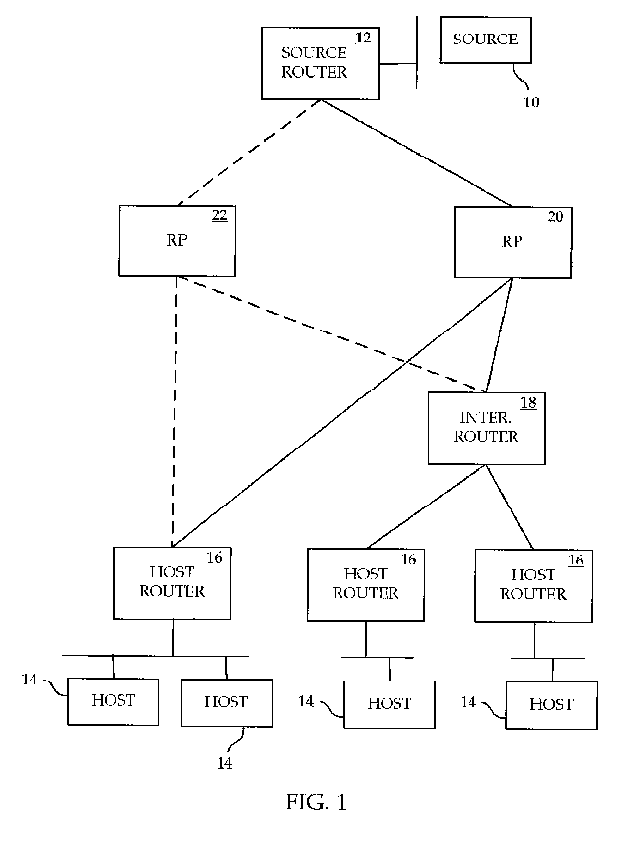

Referring to FIG. 1, a block diagram of a portion of an example network in which PIM-SM multicasting is implemented is shown. A source 10 is connected to the network through a source router 12. The source 10 provides multicast traffic belonging to a multicast group G, and a plurality of hosts 14 desire access to the content of the group G. Each host 14 connects to the network through a host router 16. Each host router 16 connects to a first rendezvous point (RP) 20, either directly or through one or more intermediate routers 18. At least one alternate RP 22 is also present in the network. All the routers are unicast reachable either by using dynamic or static unicast. The network portion shown in FIG. 1 is an example only. More generally, there is at least one source, at least one source router, at least one alternate RP, a plurality of hosts, at least one host router (a host router may support more than one host), and any number (including none) of intermediate routers.

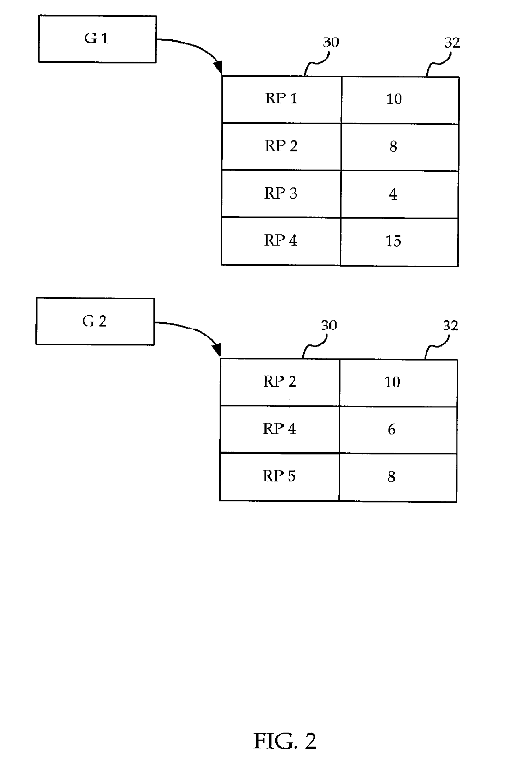

All the routers in the network have the same view of the RP for the multicast group G. The source router 12, intermediate router 18, and host routers 16 each have an identical Group-RP mapping. The Group-RP mapping lists at least one multicast group, and for each multicast group in the mapping associates a corresponding set of a plurality of eligible RPs. The Group-RP mapping is configured manually by administrators. For each multicast group, each corresponding eligible RP has an associated RP-priority which indicates the priority of selecting the particular RP as a Rendezvous Point for the group. The precise value of each RP-priority is immaterial, and may represent any type of quality (as examples, cost, delay, or simply operator preference), since only the relative values or ranking of the RPs is important. Referring to FIG. 2, an example Group-RP mapping according to one embodiment of the invention is shown. For a first group G1, four RPs are associated with group G1 and are listed in the mapping as RP identifications 30. Each RP identification 30 may be an IP address of an interface of the RP, a loopback IP address of the RP, or any other identification which allows such IP addresses to be determined. Each RP identification 30 has an associated RP-priority 32 for the group G1. The Group-RP mapping also identifies RPs associated with a second group G2. The RP identifications 30 associated with group G2 may be different from those associated with group G1, and for RPs associated with more than one group the RP-priority may be different for different groups.

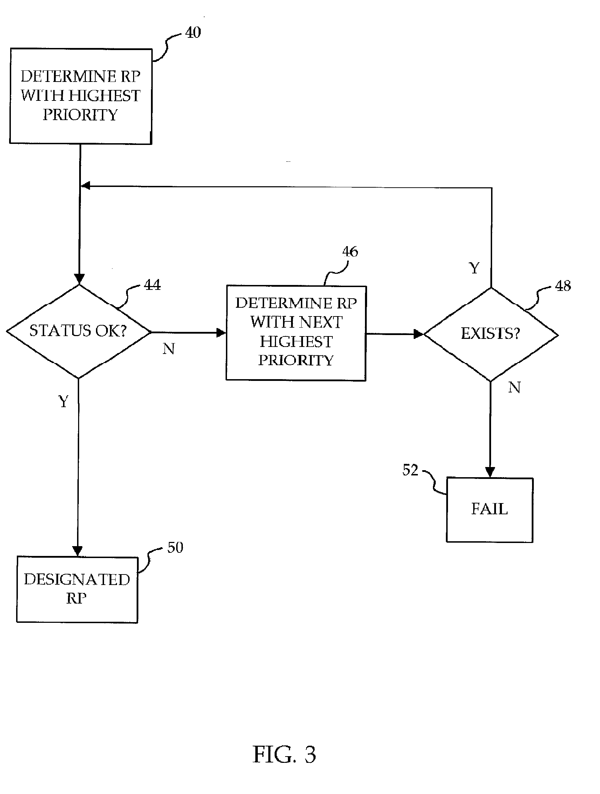

The source router 12, intermediate router 18, and host routers 16 use the Group-RP mapping to determine which RP is to be used for a given multicast group. Referring to FIG. 3, a method by which a router selects an RP for a multicast group according to one embodiment of the invention is shown. At step 40 the router consults the Group-RP mapping and determines from the RPs associated with the group the RP having the highest RP-priority. At step 44 the router determines whether the selected RP is unicast reachable. If the selected RP is unicast reachable, then the router designates the selected RP as the RP for the group at step 50.

If at step 44 the selected RP is not unicast reachable, then the router must attempt to select an alternate RP. At step 46 the router determines the RP with the next highest RP-priority. If at step 48 such an RP exists, then the router determines whether the new selected RP is unicast reachable, and if so, selects the new selected RP as the RP for the group at step 50.

If the new selected RP is not unicast reachable at step 44, the router continues to select RPs with progressively lower RP-priorities until either an alternate RP which is unicast reachable is selected, or there are no further RPs to select. In this way, the router designates for the group the RP which has the highest RP-priority for the group and which is unicast reachable. If the router determines at step 48 that there are no more alternate RPs, then there are no reachable RPs for the group and access to the content of the group fails at step 52.

Every router carries out the same method, and since each router stores (or has access to) the same Group-RP mapping and has the same view of the network (that is, has knowledge of which RPs are reachable via unicast protocols), each router will select the identical RP.

The method is carried out by host routers when selecting an RP for a group upon receipt of an IGMP-JOIN(*, G) message and intermediate routers when selecting an RP for a group upon receipt of a PIM-JOIN(*, G) message. Once an RP is selected, the router establishes a route towards the selected RP.

The method is carried out by source routers when the multicast source begins transmitting IP packets for group G. Once an RP is selected the source router registers IP packets for the group with the selected RP.

The method is also carried out by the source routers, intermediate routers, and host routers when the selected RP for a multicast group G loses its unicast reachability. In this way, the dynamic behaviour of unicast protocols (such as OSPF, ISIS, or BGP) is combined with static configuration of multiple RPs to achieve dynamic RP redundancy similar to BSR. When a router is notified that unicast reachability to a given RP has been lost (for example, by receipt of a new OSPF Update message), the RP selection method described above with reference to FIG. 3 is triggered and the next best RP which is unicast reachable is selected. Once the new RP is selected, the host routers and intermediate routers establish a new RPT towards the newly selected RP, and the source router registers multicast IP packets with the newly selected RP.

In the preferred embodiment, the selection of RPs is carried out by software instructions within a processor within each router, but may more generally be carried out by any combination of software or hardware, including hardware within an integrated circuit. The processor need not be a single device, but rather the instructions or could be located in more than one device.

The embodiments presented are exemplary only and persons skilled in the art would appreciate that variations to the embodiments described above may be made without departing from the spirit of the invention. Methods that are logically equivalent or similar to the method described above with reference to FIG. 3 may be used to implement the methods of the invention. The scope of the invention is solely defined by the appended claims.

## Claims

1. A method for selecting a Rendezvous Point (RP) for use by a router implementing PIM-SM connections, comprising the steps of:
statically configuring, for each of at least one multicast group, an identification of each of a plurality of eligible RPs and a corresponding RP-priority of each of the plurality of eligible RPs; and
at the router, selecting as the RP for a particular multicast group the eligible RP which has the highest RP-priority for the particular multicast group and which is unicast reachable.

2. The method of claim 1 wherein selecting the RP is carried out upon receipt, at the router, of a notification of unicast unreachability of a current RP.

3. The method of claim 1 wherein the router is one of a source router connected to a source of the particular multicast group, a host router connected to a ho st of the particular multicast group, and an intermediate router within an RP Tree between a host router and the RP selected for the particular multicast group.

4. A router for implementing PIM-SM multicast connections, comprising:
instructions for, for each of at least one multicast group, accessing an identification of each of a plurality of eligible RPs and a corresponding RP-priority of each of the plurality of eligible RPs; and
instructions for selecting as the RP for a particular multicast group the eligible RP which has the highest RP-priority for the particular multicast group and which is unicast reachable,
wherein the router is one of a source router connected to a source of the particular multicast group, a host router connected to a host of the particular multicast group, and an intermediate router within an RP Tree between a host router and the RP selected for the particular multicast group.

5. The router of claim 4 further comprising:
instructions for selecting as an alternate RP for the particular multicast group the eligible RP which has the highest RP-priority for the particular multicast group and which is unicast reachable, upon receipt of a notification at the router that a current RP of the particular multicast group has become unicast unreachable.

6. A method of providing Rendezvous Point (RP) redundancy for a multicast group in a PIM-SM multicast connection, comprising the steps of:
statically configuring in association with the multicast group an identification of each of a plurality of eligible RPs and a corresponding RP-priority of each of the plurality of eligible RPs;
at a router, selecting as a current RP for the multicast group the eligible RP which has the highest RP-priority for the multicast group and which is unicast reachable; and
upon receipt of a notification at the router that the current RP has become unicast unreachable, selecting as an alternate RP for the multicast group the eligible RP which has the highest RP-priority for the multicast group and which is unicast reachable.

7. The method of claim 6 wherein the router is one of a source router connected to a source of the multicast group, a host router connected to a host of the multicast group, and an intermediate router within an RP Tree between a host router and the RP selected for the multicast group.

8. A router for implementing a PIM-SM multicast connection, comprising:
instructions for accessing an identification of each of a plurality of eligible RPs associated with a multicast group and a corresponding RP-priority of each of the plurality of eligible RPs;
instructions for selecting as a current RP for the multicast group the eligible RP which has the highest RP-priority for the multicast group and which is unicast reachable; and
instructions for selecting as an alternate RP for the multicast group the eligible RP which has the highest RP-priority for the multicast group and which is unicast reachable, upon receipt of a notification at the router that the current RP has become unicast unreachable,
wherein the router is one of a source router connected to a source of the multicast group, a host router connected to a host of the multicast group, and an intermediate router within an RP Tree between a host router and the RP selected for the multicast group.
